Europäisches Patentamt

European Patent Office

Office européen des brevets

(19)

(11) EP 1 689 192 A2

(12) **EUROPEAN PATENT APPLICATION**

(43) Date of publication:
09.08.2006 Bulletin 2006/32

(51) Int Cl.:
*H04N 7/26* (2006.01)

(21) Application number: 06100807.4

(22) Date of filing: 25.01.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 04.02.2005 FR 0550345

(71) Applicant: Thomson Licensing
92100 Boulogne-Billancourt (FR)

(72) Inventors:
• Kervec, Jonathan
92648 Boulogne Cedex (FR)
• Babonneau, Jean-Yves
92648 Boulogne Cedex (FR)
• Doyen, Didier
92648 Boulogne Cedex (FR)

(74) Representative: Le Dantec, Claude
Thomson,
46, Quai Alphonse Le Gallo
92100 Boulogne-Billancourt (FR)

(54) **Method and device for scanning in a data frame**

(57) The invention relates to a method and a device for scanning pixels in a sequence of images presenting a time recurrence. According to the invention, the order of scanning of the pixels in one and the same line is reversed from one frame to the next.

Applicable to motion estimation.

Fig 2

EP 1 689 192 A2

**Description**

The invention relates to a device and a method of scanning pixels in video frames.

The invention is applicable in the field of image or video processing and is more particularly applicable in the field of motion estimation.

Many image processing algorithms assume a space-time recurrence either to eliminate any vagueness in a system of equations, or to improve the speed of convergence, or even quite simply for convergence. This is reflected, for example, by the taking into account of results derived from a direct space adjacency (pixels adjacent to the current pixel in video) to calculate the result associated with the current pixel (concept of time predictors) or even, the taking into account of results calculated during preceding images (concept of time predictors).
In the case of video processing, the latter is normally processed as it is received, that is, from left to right in the image, line by line and from top to bottom.

European patent 0360698 filed on 22 September 1989 on behalf of the company Thomson Consumer Electronics, entitled "Method and device for estimating motion in a sequence of animated images" presents a method proposing alternate scanning in the lines of one and the same frame. Such a method applies mainly to the space recurrence and, for best operation, requires at least one space predictor on the current calculation line.

The present method proposes alternating the scanning direction from one frame to the next. Reversing frame scanning acts on the time recurrence, the time predictors then being directly in "phase opposition" with the space predictors because they are derived from an opposite scan.

To this end, the present invention proposes a method of scanning pixels in a sequence of images presenting a time recurrence. According to the invention, the order of scanning of the pixels in one and the same line is reversed from one frame to the next.

Preferably, the order of scanning of the lines is reversed from one frame to the next.

According to a second aspect, the invention also relates to a method of estimating motion of a current frame relative to a reference frame, including the following steps for each pixel of the image:

- estimation of space predictors,
- estimation of time predictors.

According to the invention, the order of scanning of the pixels in one and the same line is reversed from one frame to the next so as to obtain space and time predictors derived from scans in opposite directions.

According to a preferred embodiment, for each pixel, three space predictors and one time predictor are calculated.

According to a third aspect, the invention also relates to a device for scanning pixels in a sequence of images presenting a time recurrence. According to the invention, the order of scanning of the pixels in one and the same line is reversed from one frame to the next.

According to a fourth aspect, the invention also relates to a device for estimating motion of a current frame relative to a reference frame, including:

- means of estimating space predictors for each pixel of the image,
- means of estimating time predictors for each pixel of the image.

According to the invention, the order of scanning of the pixels is in accordance with the method according to Claim 1 or 2, so as to obtain space and time predictors derived from scans in opposite directions.

The invention will be better understood and illustrated by means of exemplary embodiments and advantageous implementations, by no means limiting, with reference to the appended figures in which:

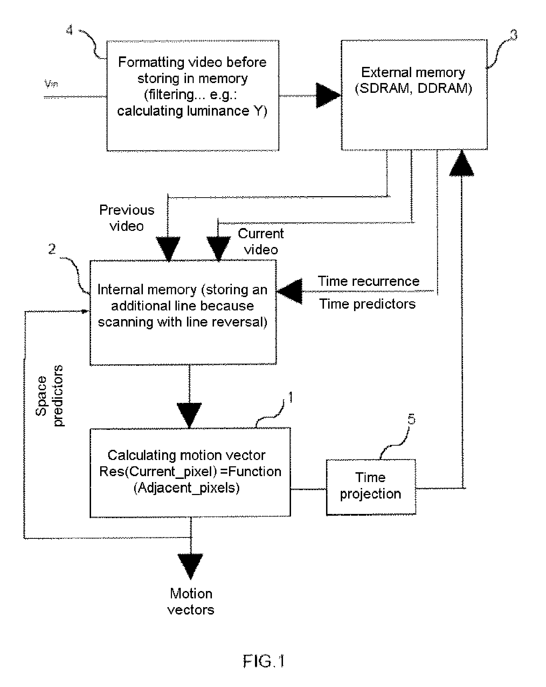

- Figure 1 represents a device according to a preferred embodiment of the invention,
- Figure 2 represents a first example of direction of scanning in the different frames,
- Figure 3 represents a second example of direction of scanning in the different frames,
- Figure 4a represents the space and time predictors of the even frames used in the scanning mode of Figures 2 and 3,
- Figure 4b represents the space and time predictors of the odd frames used in the scanning mode of Figure 2,
- Figure 4c represents the space and time predictors of the odd frames used in the scanning mode of Figure 3.

The description below is based on a motion estimation application. Other image processing operations can, of course, be considered and are included within the context of this invention. Among other exemplary embodiments, it is possible to imagine filtering, weighting, etc.

An uninterlaced video signal Vin is received by a formatting means 4 before the signal is stored. These means 4 are designed to perform processing operations on the incoming video signal such as filtering, extraction and calculation of luminance or chrominance components.

A memory 3 is provided to store the converted video signal at the output of the means 4.

The memory 3 is preferably a fast-access SDRAM or DDRAM type memory. The memory 3 has enough capacity to store a number of video frames.

The memory 3 is connected to an internal memory 2 with a capacity less than the memory 3 and intended to store at least one line of the current data frame and a line of the preceding data frame. This memory 2 is preferably implemented in the form of internal registers. It stores the line on which the current pixel is located and the number of lines needed to calculate the DFDs (displaced frame differences) from the current point. With the video being received in the left-right direction, when the scanning of the pixels for motion vector calculation is done from right to left, the line is stored in the memory 2 to be used subsequently in the space predictor calculation.

The memory 2 also receives as input time information derived from the preceding frame and generated by a time projection module 5. This time information comprises the time predictors.

A module 1 calculates the motion vectors for each pixel of the current frame. This module receives as input the luminance value of the current pixel, and of the adjacent pixels on the current line and preceding line and the time and space predictors.

The direction of scanning of the frames, also called processing direction, is as defined in Figure 2.

The even frames are processed in the incoming direction of the video, the odd frames are processed in the other direction, the lines being processed from the first line of the frame to the last line of the frame.

This video processing retains the propagation from top to bottom of the information, but the reversal of the direction of scanning in every other image has two effects:

- reversal of scanning in the time recursive loop, the time and space predictors are derived from scans in opposite directions,
- reversal of scanning in the space recursive loop, the direction of calculation is reversed every image.
  This enhances the accuracy of the processing by in no way favouring the left/right propagation of a conventional scan: the horizontal "average time scan" is zero.

Recurrence tends to propagate motion values in the direction of the scanning. This is reflected in a slight spatial offset of the motion values relative to the objects. Reversing the direction of calculation every other image limits this horizontal average offset.

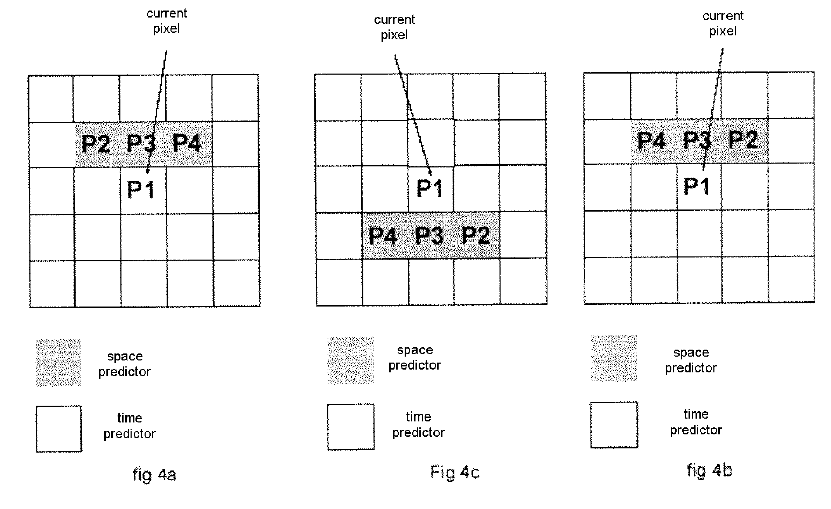

For each current pixel, a time predictor and three space predictors are calculated as indicated in Figures 4a and 4b.

The position of the time predictor corresponds to the position of the current pixel represented by P1.

The space predictors are represented by P2, P3 and P4.

The module 1 calculates the following function:

$$Res(current\_pixel) = Function(Space predictors, Time predictors)$$

In this motion estimation application, Res(Current_pixel) corresponds to the motion vector for the current pixel. The function is applied for the luminance values.

For each current pixel, a DFD value is calculated, as is a gradient value, according to methods known to those skilled in the art. The best predictor is selected and the correction term is calculated based on the DFDs and the gradient so as to produce the motion vector at the output of the module 1.

A time projection module 5 performs a time projection of the motion vector in the next frame. This time prediction is transmitted to the memory 2 in order to be used when calculating the motion vectors of the pixels of the next frame. Preferably, the order of choice of the best predictor is reversed from one frame to the next. If the DFD values match, the leftmost predictor is chosen for the even frames and the rightmost predictor is chosen for the odd frames. This also limits the favoured direction of convergence. This also offers a certain calculation time advantage because it is difficult to access the space predictor located on the same line as the current pixel.

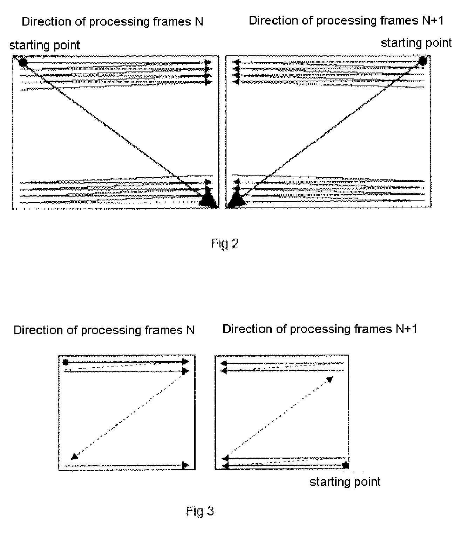

Figure 3 represents an embodiment in which the scanning of the even frames and of the odd frames is also alternated, but in a way that is different from the scanning proposed in Figure 2. In practice, in this embodiment covered by the invention, the odd frames are scanned in the reverse direction of receipt of the video at line level and the processing of the lines begins with the last line of the frame to work back up to the first line.

The time and space predictors for this embodiment are as described in Figure 4c for the odd frames and Figure 4a for the even frames.

The invention also covers the embodiment in which the even frames are processed in the reverse direction of the video incoming direction, or from right to left, and the odd frames from left to right.
In other embodiments, the number of time and space predictors can be different according to the application or the video content.
In other embodiments, the video processing can be applied to the colour components of the video.

**Claims**

1. Method of scanning pixels in a sequence of images presenting a time recurrence, **characterized in that** the order of scanning of the pixels in one and the same line is reversed from one frame to the next.

2. Method of scanning pixels according to Claim 1, **characterized in that** the order of scanning of the lines is reversed from one frame to the next.

3. Method of estimating motion of a current frame relative to a reference frame, including the following steps for each pixel of the image:

   - estimation of space predictors,
   - estimation of time predictors,

   **characterized in that** the order of scanning of the pixels is in accordance with the method according to Claim 1 or 2, so as to obtain space and time predictors derived from scans in opposite directions.

4. Method of estimating motion according to Claim 3, **characterized in that**, for each pixel, three space predictors and one time predictor are calculated.

5. Device for scanning pixels in a sequence of images presenting a time recurrence, **characterized in that** the order of scanning of the pixels in one and the same line is reversed from one frame to the next.

6. Device for estimating motion of a current frame relative to a reference frame, including:

   - means of estimating space predictors for each pixel of the image,
   - means of estimating time predictors for each pixel of the image,

   **characterized in that** the order of scanning of the pixels is in accordance with the method according to Claim 1 or 2, so as to obtain space and time predictors derived from scans in opposite directions.

7. Device according to Claim 6, **characterized in that** the order of scanning of the lines is reversed from one frame to the next.

4

Formatting video before
storing in memory
(filtering... e.g.:
calculating luminance Y)

Vin

External memory
(SDRAM, DDRAM)

3

Previous
video

Current
video

2

Internal memory (storing an
additional line because
scanning with line reversal)

Time recurrence

Time predictors

Space
predictors

1

Calculating motion vector
Res(Current_pixel) =Function
(Adjacent_pixels)

5

Time
projection

Motion
vectors

FIG.1

Direction of processing frames N          Direction of processing frames N+1

starting point                                              starting point

Fig 2

Direction of processing frames N          Direction of processing frames N+1

starting point

Fig 3

current
pixel

| P2 | P3 | P4 |

P1

space
predictor

time
predictor

fig 4a

current
pixel

P1

| P4 | P3 | P2 |

space
predictor

time
predictor

Fig 4c

current
pixel

| P4 | P3 | P2 |

P1

space
predictor

time
predictor

fig 4b